Europäisches Patentamt

European Patent Office

Office européen des brevets

(19)

(11) **EP 1 227 309 A2**

(12) **EUROPEAN PATENT APPLICATION**

(43) Date of publication:
**31.07.2002 Bulletin 2002/31**

(51) Int Cl.[7]: **G01M 11/00**

(21) Application number: **02250531.7**

(22) Date of filing: **25.01.2002**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **29.01.2001 JP 2001020480**

(71) Applicant: **Ando Electric Co., Ltd.
Tokyo 144-0052 (JP)**

(72) Inventors:
• **Aoki, Shoichi, c/o Ando Electric Co., Ltd.
Tokyo 144-0052 (JP)**
• **Ichikawa, Akio, c/o Ando Electric Co., Ltd.
Tokyo 144-0052 (JP)**

(74) Representative: **Dealtry, Brian
Eric Potter Clarkson,
Park View House,
58 The Ropewalk
Nottingham NG1 5DD (GB)**

(54) **Method and Apparatus for measuring chromatic dispersion distribution**

(57)    A chromatic dispersion distribution measurement apparatus (100), comprises: an output light (1) intensity measurement unit for measuring an intensity of an output light (2) outputted from an optical device to be measured (11); and an input light intensity control unit for automatically controlling an intensity of an input light to be inputted into the optical device to be measured (11), in accordance with the intensity of the output light, which is measured by the light intensity measurement unit.

## FIG.1

**Description**

BACKGROUND OF THE INVENTION

Field of the Invention

The present invention relates to a chromatic dispersion distribution measurement apparatus for measuring a chromatic dispersion distribution in an optical device to be measured, such as an optical fiber, and a method for the same. Further, the present invention relates to an input light intensity control device for testing an optical device or the like, and a method for the same.

Description of Related Art

In recent years, in order to satisfy the demands for high speed information communications, optical communication systems using optical fibers have been constructed. One of the factors in preventing the high speed signal transmission and the long transmission distance in the above optical communication systems, is the chromatic dispersion. The chromatic dispersion is a phenomenon caused by varying the speeds of lights transmitted in a medium, with the wavelength of the light. In the construction of the optical communication systems, it is necessary to grasp the chromatic dispersion characteristic in detail.

A chromatic dispersion distribution measurement apparatus for measuring the chromatic dispersion is shown in, for example, Japanese Patent Application Publication No. Tokukai-Hei 10-83006 (corresponding to the United States Patent No. 5,956,131 and the European Patent Application No. 0819926A2). In the publication, the chromatic dispersion distribution measurement apparatus measures the dispersion distribution in a longitudinal direction of a fiber to be measured, as follows. Two lights having different wavelengths from each other are inputted into the fiber to be measured. A specific wavelength component is extracted by an optical bandpass filter from a four-wave mixed light caused by the interaction between these two lights. A light having the extracted specific wavelength component is inputted into an Optical Time Domain Reflectometer (OTDR).

The four-wave mixing (FWM) is a phenomenon caused by the non-linearity of a plurality of lights having different wavelengths from each other in an optical fiber. For example, when two lights have wavelengths $\lambda 1$ and $\lambda 2$ respectively, a wavelength $\lambda 3$ of a light (Stokes light) caused by this phenomenon and a wavelength $\lambda 4$ of a light (anti-Stokes light) caused by the phenomenon satisfy the following equation (1).

$$\lambda 2 - \lambda 1 = \lambda 1 - \lambda 4 = \lambda 3 - \lambda 2 \qquad (1)$$

However, in such a chromatic dispersion distribution measurement apparatus, there are some problems. In consideration of the generating efficiency of the FWM light, the amount of the input light to be inputted into the fiber to be measured, is as much as possible, preferably. That is, when the amount of the input light is much, the range (fiber length) in which the fiber to be measured can be measured, becomes wide (long) in proportion to the amount of the input light. Contrarily, when the amount of the input light is too much, the inconvenience of the measurement is caused. The intensity distribution of the FWM light cyclically varies with the transmission distance, that is, the intensity oscillates. However, when the amount of the input light is too much, it is difficult to measure the chromatic dispersion distribution of the FWM light because the amount of the light received by the OTDR is too much.

Therefore, it is necessary to adjust the amount of the input light in every measurement in accordance with the type of the fiber to be measured or the connecting condition thereof. In a chromatic dispersion distribution measurement apparatus according to an earlier development, an observer controls the amount of the input light by manually adjusting the gain of the optical amplifier. An observer is required to control the amount of the input light whenever the type of the fiber to be measured or the connecting condition thereof is changed. As a result, it is inconvenient for an observer to control the amount of the input light. Because an observer manually controls the amount of the input light, the variation in the measurement data is caused. As a result, the accuracy of the measurement is deteriorated.

SUMMARY OF THE INVENTION

In order to solve the above-described problems, an object of the present invention is to provide a chromatic dispersion distribution measurement apparatus and a method for the same and an input light intensity control device and a method for the same, which can easily control the amount of the input light to be inputted into a fiber to be measured.

That is, in accordance with the first aspect of the present invention, a chromatic dispersion distribution measurement apparatus, comprises:

two light sources for emitting two lights having different wavelengths from each other;
an intensity measurement unit for measuring a light intensity of a four-wave mixed light outputted from an optical device to be measured, as a function of a transmission distance in the optical device to be measured, when the emitted two lights are inputted into the optical device to be measured;
an input light control unit for controlling an intensity of the emitted two lights to be inputted into the optical device to be measured, in accordance with the light intensity of the four-wave mixed light, which is measured by the intensity measurement unit; and

a chromatic dispersion calculating unit for calculating a chromatic dispersion value of the optical device to be measured, in accordance with the light intensity of the four-wave mixed light, which is measured by the intensity measurement unit, as a function of the transmission distance.

In accordance with the second aspect of the present invention, a chromatic dispersion distribution measurement method, comprises:

measuring a light intensity of a four-wave mixed light outputted from an optical device to be measured, as a function of a transmission distance in the optical device to be measured, when two lights are inputted into the optical device to be measured;
controlling an intensity of the two lights to be inputted into the optical device to be measured, in accordance with the measured light intensity of the four-wave mixed light; and
calculating a chromatic dispersion value of the optical device to be measured, in accordance with the light intensity of the four-wave mixed light as a function of the transmission distance.

According to the first and the second aspects of the present invention, the amount of the input light to be inputted into the optical device to be measured, can be automatically adjusted to the proper one whenever the type of the optical device to be measured or the connecting condition thereof is changed. The apparatus and method become excellent in the operational performance and the functional performance.

The input light control unit may set a first standard value for confirming whether the light intensity of the four-wave mixed light, which is measured by the intensity measurement unit, cyclically varies with the transmission distance; may set a second standard value for confirming whether the light intensity exceeds a predetermined one; and may control the intensity of the emitted two lights to be inputted into the optical device to be measured, in accordance with the first standard value and the second standard value so that an amplitude of the light intensity is within a predetermined range.

The controlling may be carried out by setting a first standard value for confirming whether the measured light intensity of the four-wave mixed light cyclically varies with the transmission distance; setting a second standard value for confirming whether the light intensity exceeds a predetermined one; and controlling the intensity of the two lights to be inputted into the optical device to be measured, in accordance with the first standard value and the second standard value so that an amplitude of the light intensity is within a predetermined range.

Even though the type of the optical device to be measured or the connecting condition thereof is changed, the amount of the input light to be inputted into the optical device to be measured, is adjusted to the proper one. That is, the amount of the input light is automatically controlled so as to measure the FWM light transmitted from a sufficient distance. Because the trouble that the intensity of the input light to be inputted into the optical device to be measured is manually adjusted in every measurement, can be saved, the operational performance and the functional performance become excellent. Further, an observer is not required to manually adjust the intensity of the input light. The variation in the amount of the light, which is caused by the manual control, can be reduced. Therefore, it is possible to avoid deteriorating the accuracy of the measurement data.

In accordance with the third aspect of the present invention, a chromatic dispersion distribution measurement apparatus, comprises:

an output light intensity measurement unit for measuring an intensity of an output light outputted from an optical device to be measured; and
an input light intensity control unit for automatically controlling an intensity of an input light to be inputted into the optical device to be measured, in accordance with the intensity of the output light, which is measured by the output light intensity measurement unit.

The chromatic dispersion distribution measurement apparatus may further comprise an amplifier for amplifying the input light;
wherein the input light intensity control unit adjusts a gain of the amplifier in accordance with the intensity of the output light.

The output light intensity measurement unit may measure an output light intensity distribution as a function of a transmission distance in the optical device to be measured; and
the input light intensity control unit may control the intensity of the input light so as to obtain the output light intensity distribution which cyclically varies with the transmission distance.

The input light intensity control unit may set a first standard value and a second standard value; may judge whether the output light intensity distribution varies with the transmission distance in accordance with the first standard value; and may judge whether the intensity of the output light is enough to calculate a chromatic dispersion distribution of the optical device to be measured, in accordance with the second standard value.

In accordance with the fourth aspect of the present invention, a chromatic dispersion distribution measurement method, comprises:

measuring an intensity of an output light outputted from an optical device to be measured; and
automatically controlling an intensity of an input light to be inputted into the optical device to be measured, in accordance with the measured intensity of the output light.

The chromatic dispersion distribution measurement method may further comprise:

amplifying the input light;

wherein the controlling is carried out by adjusting a gain of the amplifying in accordance with the measured intensity of the output light.

The measuring may be carried out by measuring an output light intensity distribution as a function of a transmission distance in the optical device to be measured; and

the controlling may be carried out by controlling the intensity of the input light so as to obtain the output light intensity distribution which cyclically varies with the transmission distance.

The controlling may be carried out by setting a first standard value and a second standard value; judging whether the output light intensity distribution varies with the transmission distance in accordance with the first standard value; and judging whether the intensity of the output light is enough to calculate a chromatic dispersion distribution in the optical device to be measured, in accordance with the second standard value.

In accordance with the fifth aspect of the present invention, an input light intensity control device, comprises:

an output light intensity measurement unit for measuring an intensity of an output light outputted from an optical device to be measured; and an input light intensity control unit for automatically controlling an intensity of an input light to be inputted into the optical device to be measured, in accordance with the intensity of the output light, which is measured by the output light intensity measurement unit.

The input light intensity control device may further comprise an amplifier for amplifying the input light; wherein the input light intensity control unit adjusts a gain of the amplifier in accordance with the intensity of the output light.

The output light intensity measurement unit may measure an output light intensity distribution as a function of a transmission distance in the optical device to be measured; and

the input light intensity control unit may control the intensity of the input light so as to obtain the output light intensity distribution which cyclically varies with the transmission distance.

The input light intensity control unit may set a first standard value and a second standard value; may judge whether the output light intensity distribution varies with the transmission distance in accordance with the first standard value; and may judge whether the intensity of the output light is enough to calculate a chromatic dispersion distribution in the optical device to be measured, in accordance with the second standard value.

In accordance with the sixth aspect of the present invention, an input light intensity control method, comprises:

measuring an intensity of an output light outputted from an optical device to be measured; and automatically controlling an intensity of an input light to be inputted into the optical device to be measured, in accordance with the measured intensity of the output light.

The input light intensity control method may further comprise:

amplifying the input light;

wherein the controlling is carried out by adjusting a gain of the amplifying in accordance with the measured intensity of the output light.

The measuring may be carried out by measuring an output light intensity distribution as a function of a transmission distance in the optical device to be measured; and

the controlling may be carried out by controlling the intensity of the input light so as to obtain the output light intensity distribution which cyclically varies with the transmission distance.

The controlling may be carried out by setting a first standard value and a second standard value; judging whether the output light intensity distribution varies with the transmission distance in accordance with the first standard value; and judging whether the intensity of the output light is enough to calculate a chromatic dispersion distribution in the optical device to be measured, in accordance with the second standard value.

BRIEF DESCRIPTION OF THE DRAWINGS

The present invention will become more fully understood from the detailed description given hereinbelow and the accompanying drawings which are given by way of illustration only, and thus are not intended as a definition of the limits of the present invention, and wherein;

FIG. 1 is a block diagram showing a structure of an optical fiber chromatic dispersion distribution measurement apparatus to which the present invention is applied;
FIG. 2 shows an intensity distribution of a FWM light (a light passed through the optical BPF), which is outputted from the OTDR shown in FIG. 1;
FIG. 3 shows a flow chart for explaining a calculation process for calculating a chromatic dispersion distribution in the optical fiber to be measured, which is shown in FIG. 1; and

FIG. 4 shows a flow chart for explaining a gain control process for controlling a gain of the EDFA shown in FIG. 1.

## PREFERRED EMBODIMENT OF THE INVENTION

Hereinafter, an embodiment of the present invention will be explained in detail with reference to the drawings.

Firstly, the structure of the embodiment will be explained.

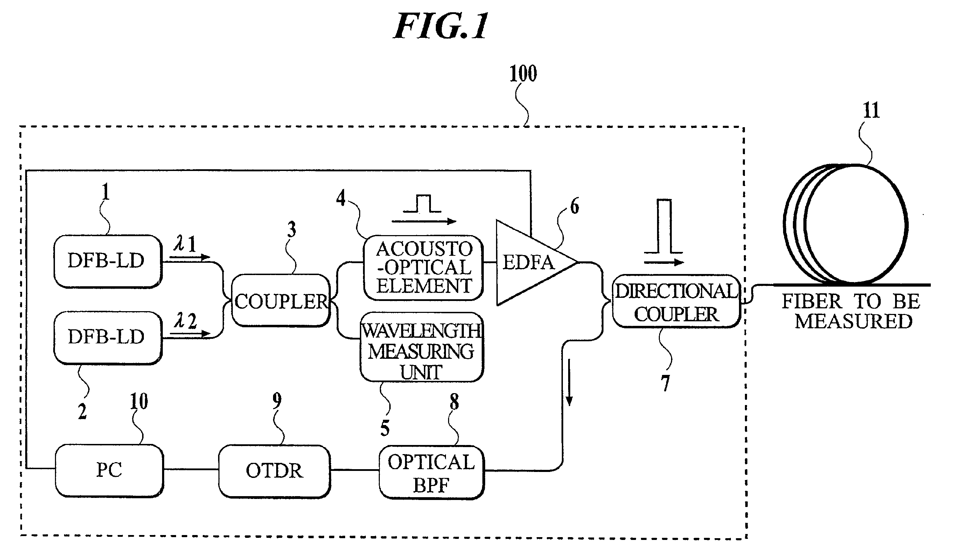

FIG. 1 is a block diagram showing the structure of the optical fiber chromatic dispersion distribution measurement apparatus 100 to which the present invention is applied.

In FIG. 1, the optical fiber chromatic dispersion distribution measurement apparatus 100 comprises two distributed feedback-laser diodes (DFB-LD) 1 and 2, a coupler 3, an acousto-optical element 4, a wavelength measuring unit 5, an erbium-doped fiber amplifier (EDFA) 6, a directional coupler 7, an optical bandpass filter (BPF) 8, an optical time domain reflectometer (OTDR) 9, a personal computer (PC) 10 and the like. A fiber 11 to be measured is connected with the optical fiber chromatic dispersion distribution measurement apparatus 100.

The DFB-LDs 1 and 2 are light sources . The DFB-LD 1 outputs a light having a wavelength λ1. The DFB-LD 2 outputs a light having a wavelength λ2 (which is not equal to λ1).

The coupler (coupler unit) 3 couples two lights outputted from the DFB-LDs 1 and 2. The acousto-optical element 4 shapes a waveform of the coupled light outputted from the coupler 3, into a pulse form. The wavelength measuring unit 5 monitors the waveform of the coupled light outputted from the coupler 3.

The EDFA 6 amplifies the pulse light outputted from the acousto-optical element 4. In particular, the gain of the EDFA 6 is controlled (increased or decreased) in accordance with a control signal outputted from the PC 10 which will be explained below.

The directional coupler 7 is connected with the fiber 11 to be measured. The directional coupler 7 outputs the pulse light amplified by the EDFA 6, to the fiber 11 to be measured. Further, the directional coupler 7 outputs all of the reflected lights including the FWM light, which are outputted from the fiber 11 to be measured, to the optical BPF 8.

The optical BPF 8 passes only a light having a specific wavelength out of the all of the reflected lights outputted from the fiber 11 to be measured, and outputs the passed light to the OTDR 9. In this embodiment, the optical BPF 8 passes one of the Stokes light and the anti-Stokes light.

In accordance with the passed light (Stokes light or anti-Stokes light) from the optical BPF 8, the OTDR 9 measures the intensity distribution of the passed light (the FWM light) or the loss distribution for the light inputted into the fiber 11 to be measured.

The PC 10 executes each type of operating process related to the data outputted from the OTDR 9, for example, measures the optical fiber chromatic dispersion distribution. Further, the PC 10 outputs a control signal for controlling a gain of the EDFA 6, to the EDFA 6 in accordance with the data outputted from the OTDR 9.

When two lights having different wavelengths from each other, which are outputted from the DFB-LDs 1 and 2, are supplied to the fiber 11 to be measured through the directional coupler 7, the fiber 11 to be measured generates an FWM light by the interaction between these two lights.

Next, the operation of the embodiment will be explained.

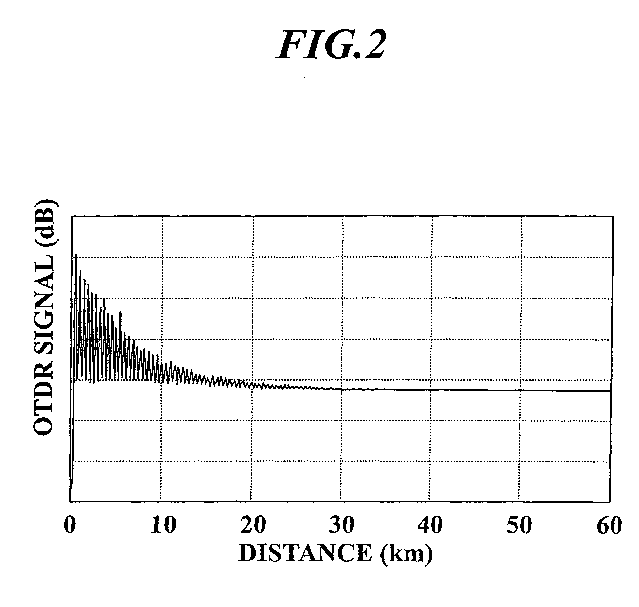

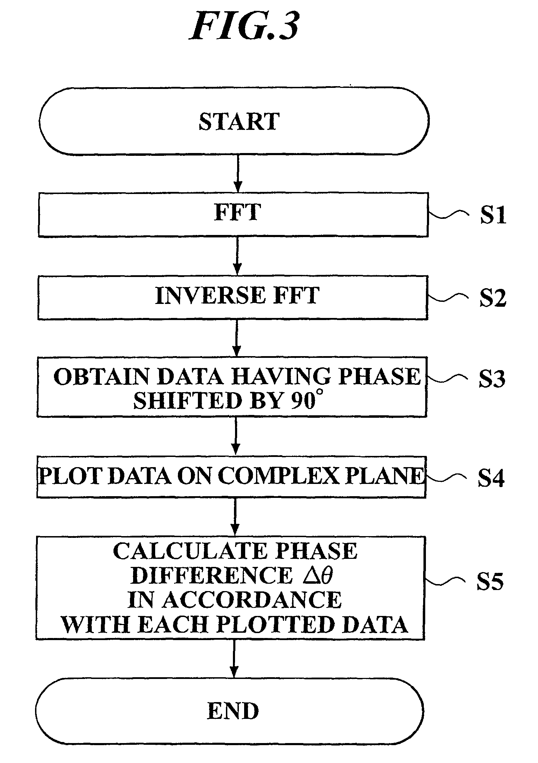

With reference to FIGS. 2 and 3, a calculation process for calculating a chromatic dispersion distribution in the fiber 11 to be measured, in accordance with a waveform data of the FWM light, which is outputted from the OTDR 9, will be explained. FIG. 2 shows an intensity distribution of the FWM light (the light passed through the optical BPF 8), which is outputted from the OTDR 9. FIG. 3 shows a flow chart for explaining the calculation process for calculating a chromatic dispersion distribution in the optical fiber 11 to be measured.

In FIG. 2, an abscissa axis represents a transmission distance of the FWM light transmitted in the fiber 11 to be measured. An ordinate axis represents the intensity of the FWM light (the light passed through the optical BPF 8).

As shown in FIG. 2, the intensity distribution data of the FWM light, which is outputted from the OTDR 9 to the PC 10 shows the intensity of the FWM light transmitted from each point of the fiber 11 to be measured, as a function of the transmission distance. The intensity cyclically varies with the transmission distance, that is, the intensity oscillates. Therefore, the transmission distance corresponds to the phase θ(λ) in the cyclic variation (oscillation) of the intensity distribution.

The PC 10 executes the fast Fourier transform (FFT) of the intensity distribution data of the FWM light outputted from the OTDR 9, in order to calculate the data expressed by a frequency spectrum (Step S1). Next, in a plurality of data expressed by the frequency spectrum, the PC 10 executes the inverse Fourier transform (inverse FFT) of only the data at positive frequencies (Step S2). Then, the PC 10 calculates the data having the phase shifted by 90° from the original intensity distribution data of the FWM light (Step S3).

The PC 10 plots the data obtained in the Step S3 on a complex plane (Step S4). Then, each phase difference Δθ(λ) between two adjacent plotted data is calculated (Step S5). Each chromatic dispersion value is calculated in accordance with the calculated phase

difference $\Delta\theta(\lambda)$.

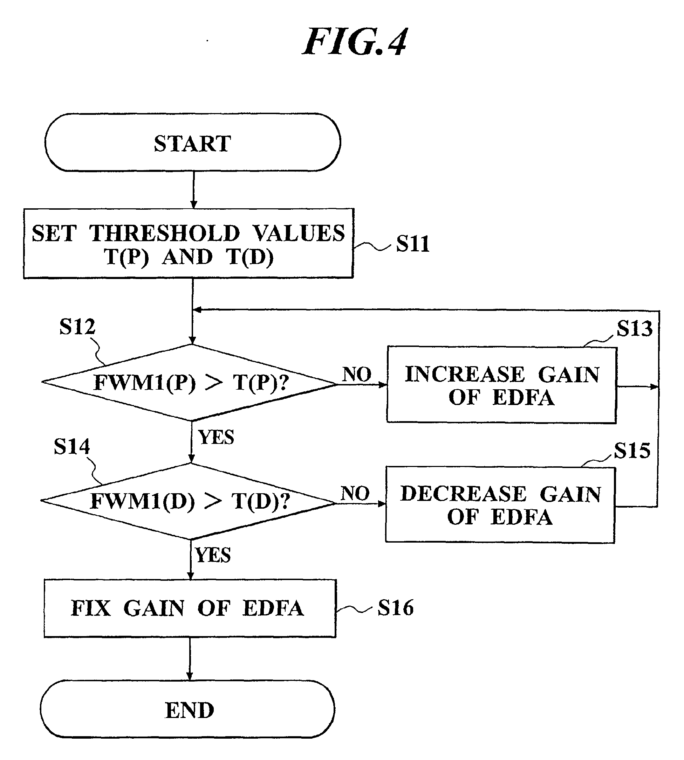

Next, with reference to FIGS. 2 and 4, the gain control process of the optical fiber chromatic dispersion distribution measurement apparatus 100 to which the present invention is applied will be explained. FIG. 4 shows a flow chart for explaining the gain control process for controlling a gain of the EDFA 6.

The gain control process is executed in accordance with the intensity distribution data of the FWM light, which is outputted from the OTDR 9 shown in FIG. 2. Firstly, an observer inputs two threshold values T(P) and T(D) into the PC 10 (Step S11). The T(P) is a threshold value for the first peak value (first maximal value) of the intensity distribution data of the FWM light, which is outputted from the OTDR 9. The T(P) is set in order to judge whether the intensity of the FWM light is enough to calculate the chromatic dispersion distribution in a long fiber to be measured. Hereinafter, the first peak value is referred to as "FWM1(P)". When the FWM1(P) is not smaller than the T(P), it is possible to measure the FWM light transmitted from a sufficient distance.

The T(D) is a threshold value for the difference between the first bottom value (first minimum value) of the intensity distribution data of the FWM light, which is outputted from the OTDR 9, and the FWM1(P). The T(D) is set to judge whether the intensity distribution of the FWM light cyclically varies with the transmission distance enough to calculate the chromatic dispersion distribution in the fiber 11 to be measured, in particular, enough to execute the FFT of the intensity distribution data of the FWM light. Hereinafter, the difference is referred to as "FWM1(D)". When the FWM1(D) is not smaller than the T(D), the cyclicality of the intensity distribution data of the FWM light is maintained. As a result, it is possible to measure the chromatic dispersion distribution of the FWM light.

These T(P) and T(D) are specified in accordance with the data which is previously measured by an observer. The T(P) and T(D) generally vary with the type of fiber to be measured or the connecting condition thereof.

The PC 10 extracts the FWM1(P) and the FWM1(D) from the intensity distribution data of the FWM light, which is outputted from the OTDR 9. Further, the PC 10 compares the extracted FWM1(P) with the T(P) in order to judge whether the FWM1(P) is larger than the T(P) (Step S12).

In Step S12, when the FWM1(P) is not larger than T(P) (Step S12; No), the PC 10 increases the gain of the EDFA 6 by a predetermined amount (Step S13). Then, the process transfers to the Step S12. When the FWM1(P) is larger than the T(P) (Step S12; Yes), it is judged whether the FWM1(D) is larger than the T(D) (Step S14).

In Step S14, when the FWM1(D) is not larger than T(D) (Step S14; No), the PC 10 decreases the gain of the EDFA 6 by a predetermined amount (Step S15). Then, the process transfers to the Step S12. When the FWM1(D) is larger than the T(D) (Step S14; Yes), the gain of the EDFA 6 is fixed.

As described above, the optical fiber chromatic dispersion distribution measurement apparatus 100 according to the present invention, comprises the PC 10 which can control the gain of the EDFA 6 in accordance with the intensity distribution data of the FWM light, which is outputted from the OTDR 9. Therefore, even though the type of the fiber to be measured or the connecting condition thereof is changed, the amount of the input light to be inputted into the fiber to be measured, is adjusted to the proper one. That is, the amount of the input light is automatically controlled so as to measure the FWM light transmitted from a sufficient distance. Because the trouble that the gain of the EDFA 6 is manually adjusted in every measurement, can be saved, the operational performance of the apparatus and the functional performance thereof become excellent. Further, an observer is not required to manually adjust the gain of the EDFA 6. The variation in the amount of the light, which is caused by the manual gain control, can be reduced. Therefore, it is possible to avoid deteriorating the accuracy of the measurement data.

In this embodiment, the PC 10 both controls the intensity of the input light and calculates the chromatic dispersion distribution in the fiber 11 to be measured. However, an input light intensity control unit for controlling the intensity of the input light and a chromatic dispersion calculating unit for calculating the chromatic dispersion distribution may be separated from each other. Further, the output light intensity measurement unit (for example, the OTDR 9) for measuring the intensity of the FWM light and the input light intensity control unit may constitute the input light intensity control device for various optical measurement apparatuses, such as a chromatic dispersion distribution measurement apparatus.

In this embodiment, the PC 10 controls the gain of the EDFA 6 to control the intensity of the input light. However, the PC 10 may directly control the DFB-LDs 1 and 2 to control the intensity of the input light.

The entire disclosure of Japanese Patent Application No. Tokugan 2001-20480 filed on January 29, 2001 including specification, claims drawings and summary are incorporated herein by reference in its entirety.

**Claims**

1. A chromatic dispersion distribution measurement apparatus, comprising:

   two light sources for emitting two lights having different wavelengths from each other;
   an intensity measurement unit for measuring a light intensity of a four-wave mixed light outputted from an optical device to be measured, as a function of a transmission distance in the optical device to be measured, when the emitted two lights are inputted into the optical device to be measured;

an input light control unit for controlling an intensity of the emitted two lights to be inputted into the optical device to be measured, in accordance with the light intensity of the four-wave mixed light, which is measured by the intensity measurement unit; and

a chromatic dispersion calculating unit for calculating a chromatic dispersion value of the optical device to be measured, in accordance with the light intensity of the four-wave mixed light, which is measured by the intensity measurement unit, as a function of the transmission distance.

**2.** The chromatic dispersion distribution measurement apparatus as claimed in claim 1, wherein the input light control unit sets a first standard value for confirming whether the light intensity of the four-wave mixed light, which is measured by the intensity measurement unit, cyclically varies with the transmission distance; sets a second standard value for confirming whether the light intensity exceeds a predetermined one; and controls the intensity of the emitted two lights to be inputted into the optical device to be measured, in accordance with the first standard value and the second standard value so that an amplitude of the light intensity is within a predetermined range.

**3.** A chromatic dispersion distribution measurement method, comprising:

measuring a light intensity of a four-wave mixed light outputted from an optical device to be measured, as a function of a transmission distance in the optical device to be measured, when two lights are inputted into the optical device to be measured;

controlling an intensity of the two lights to be inputted into the optical device to be measured, in accordance with the measured light intensity of the four-wave mixed light; and

calculating a chromatic dispersion value of the optical device to be measured, in accordance with the light intensity of the four-wave mixed light as a function of the transmission distance.

**4.** The chromatic dispersion distribution measurement method as claimed in claim 3, wherein the controlling is carried out by setting a first standard value for confirming whether the measured light intensity of the four-wave mixed light cyclically varies with the transmission distance; setting a second standard value for confirming whether the light intensity exceeds a predetermined one; and controlling the intensity of the two lights to be inputted into the optical device to be measured, in accordance with the first standard value and the second standard value so that an amplitude of the light intensity is within a predetermined range.

**5.** A chromatic dispersion distribution measurement apparatus, comprising:

an output light intensity measurement unit for measuring an intensity of an output light outputted from an optical device to be measured; and

an input light intensity control unit for automatically controlling an intensity of an input light to be inputted into the optical device to be measured, in accordance with the intensity of the output light, which is measured by the output light intensity measurement unit.

**6.** The chromatic dispersion distribution measurement apparatus as claimed in claim 5, further comprising an amplifier for amplifying the input light;

wherein the input light intensity control unit adjusts a gain of the amplifier in accordance with the intensity of the output light.

**7.** The chromatic dispersion distribution measurement apparatus as claimed in claim 5 or 6, wherein the output light intensity measurement unit measures an output light intensity distribution as a function of a transmission distance in the optical device to be measured; and

the input light intensity control unit controls the intensity of the input light so as to obtain the output light intensity distribution which cyclically varies with the transmission distance.

**8.** The chromatic dispersion distribution measurement apparatus as claimed in claim 7, wherein the input light intensity control unit sets a first standard value and a second standard value; judges whether the output light intensity distribution varies with the transmission distance in accordance with the first standard value; and judges whether the intensity of the output light is enough to calculate a chromatic dispersion distribution in the optical device to be measured, in accordance with the second standard value.

**9.** A chromatic dispersion distribution measurement method, comprising:

measuring an intensity of an output light outputted from an optical device to be measured; and

automatically controlling an intensity of an input light to be inputted into the optical device to be measured, in accordance with the measured intensity of the output light.

**10.** The chromatic dispersion distribution measurement method as claimed in claim 9, further comprising:

amplifying the input light;

wherein the controlling is carried out by adjusting a gain of the amplifying in accordance with the measured intensity of the output light.

**11.** The chromatic dispersion distribution measurement method as claimed in claim 9 or 10, wherein the measuring is carried out by measuring an output light intensity distribution as a function of a transmission distance in the optical device to be measured; and

the controlling is carried out by controlling the intensity of the input light so as to obtain the output light intensity distribution which cyclically varies with the transmission distance.

**12.** The chromatic dispersion distribution measurement method as claimed in claim 11, wherein the controlling is carried out by setting a first standard value and a second standard value; judging whether the output light intensity distribution varies with the transmission distance in accordance with the first standard value; and judging whether the intensity of the output light is enough to calculate a chromatic dispersion distribution in the optical device to be measured, in accordance with the second standard value.

**13.** An input light intensity control device, comprising:

an output light intensity measurement unit for measuring an intensity of an output light outputted from an optical device to be measured; and an input light intensity control unit for automatically controlling an intensity of an input light to be inputted into the optical device to be measured, in accordance with the intensity of the output light, which is measured by the output light intensity measurement unit.

**14.** The input light intensity control device as claimed in claim 13, further comprising an amplifier for amplifying the input light;

wherein the input light intensity control unit adjusts a gain of the amplifier in accordance with the intensity of the output light.

**15.** The input light intensity control device as claimed in claim 13 or 14, wherein the output light intensity measurement unit measures an output light intensity distribution as a function of a transmission distance in the optical device to be measured; and

the input light intensity control unit controls the intensity of the input light so as to obtain the output light intensity distribution which cyclically varies with the transmission distance.

**16.** The input light intensity control device as claimed in claim 15, wherein the input light intensity control unit sets a first standard value and a second standard value; judges whether the output light intensity distribution varies with the transmission distance in accordance with the first standard value; and judges whether the intensity of the output light is enough to calculate a chromatic dispersion distribution in the optical device to be measured, in accordance with the second standard value.

**17.** An input light intensity control method, comprising:

measuring an intensity of an output light outputted from an optical device to be measured; and automatically controlling an intensity of an input light to be inputted into the optical device to be measured, in accordance with the measured intensity of the output light.

**18.** The input light intensity control method as claimed in claim 17, further comprising:

amplifying the input light;

wherein the controlling is carried out by adjusting a gain of the amplifying in accordance with the measured intensity of the output light.

**19.** The input light intensity control method as claimed in claim 17 or 18, wherein the measuring is carried out by measuring an output light intensity distribution as a function of a transmission distance in the optical device to be measured; and

the controlling is carried out by controlling the intensity of the input light so as to obtain the output light intensity distribution which cyclically varies with the transmission distance.

**20.** The input light intensity control method as claimed in claim 19, wherein the controlling is carried out by setting a first standard value and a second standard value; judging whether the output light intensity distribution varies with the transmission distance in accordance with the first standard value; and judging whether the intensity of the output light is enough to calculate a chromatic dispersion distribution in the optical device to be measured, in accordance with the second standard value.

# FIG.1

EP 1 227 309 A2

## FIG.2

# *FIG.3*

```
          ┌─────────────────────────┐
          │          START          │
          └─────────────────────────┘
                       │
                       ▼
          ┌─────────────────────────┐
          │          FFT            │ ～ S1
          └─────────────────────────┘
                       │
                       ▼
          ┌─────────────────────────┐
          │       INVERSE FFT       │ ～ S2
          └─────────────────────────┘
                       │
                       ▼
          ┌─────────────────────────┐
          │ OBTAIN DATA HAVING PHASE│ ～ S3
          │     SHIFTED BY 90°      │
          └─────────────────────────┘
                       │
                       ▼
          ┌─────────────────────────┐
          │ PLOT DATA ON COMPLEX PLANE│ ～ S4
          └─────────────────────────┘
                       │
                       ▼
          ┌─────────────────────────┐
          │    CALCULATE PHASE      │
          │    DIFFERENCE Δθ        │ ～ S5
          │    IN ACCORDANCE        │
          │ WITH EACH PLOTTED DATA  │
          └─────────────────────────┘
                       │
                       ▼
          ┌─────────────────────────┐
          │          END            │
          └─────────────────────────┘
```

# FIG.4

```
                    ┌──────────────────────┐
                    │       START          │
                    └──────────────────────┘
                               │
                               ▼
              ┌────────────────────────────────┐
              │  SET  THRESHOLD  VALUES        │─── S11
              │     T(P)  AND  T(D)            │
              └────────────────────────────────┘
                               │
                               ▼
    S12                                                          S13
        ◇─────────────────────────┐  NO   ┌──────────────────────┐
       ╱  FWM1(P) > T(P)?          ├──────▶│  INCREASE  GAIN      │
        ◇─────────────────────────┘       │     OF  EDFA         │
                    │ YES                  └──────────────────────┘
                    ▼
    S14                                                          S15
        ◇─────────────────────────┐  NO   ┌──────────────────────┐
       ╱  FWM1(D) > T(D)?          ├──────▶│  DECREASE  GAIN      │
        ◇─────────────────────────┘       │     OF  EDFA         │
                    │ YES                  └──────────────────────┘
                    ▼
    ┌────────────────────────────────┐
    │  FIX  GAIN  OF  EDFA           │─── S16
    └────────────────────────────────┘
                    │
                    ▼
    ┌────────────────────────────────┐
    │           END                  │
    └────────────────────────────────┘
```